# EUROPEAN PATENT APPLICATION

(11) **EP 2 028 857 A1**
(43) Date of publication of application: **25.02.2009**
(21) Application number: 07291032.6
(22) Date of filing: 21.08.2007
(51) Int. Cl.: H04N 7/173

(54) **Method and system for pausing and resuming a real-time data stream**

(71) Applicant: Alcatel Lucent, 75008 Paris (FR)
(72) Inventor: van Caenegem, Tom, 9820 Schelderode (BE)
(74) Representative: D'Halleweyn, Nele Veerle Trees Gertrudis

(57) **Abstract**

The invention relates to a method and system for pausing a real-time data stream from a second node to a first node, and consequently resuming said data stream, wherein a real-time data stream is sent from the second node to the first node, using a transport protocol having packets with identifiers; and said data stream is interrupted, whereupon the first node requests the second node to resume the interrupted data stream, using a control protocol, wherein a transport protocol packet identifier of a packet of the data stream received by the first node before interrupting said data stream is used by the control protocol to indicate from which packet onwards the interrupted data stream has to be sent by the second node.

## Description

The invention relates to a method and a system for pausing a real-time data stream, in particular live TV, and consequently resuming this data stream.

Time-Shifted TV (TSTV) is a service allowing to pause live TV and to resume watching some time later. It is considered to be one of the key features of an Internet protocol TV (IPTV) service package.

At present, one way to implement time shifting consists in using a personal video recorder (PVR) at the customer home. Many Set-top box (STB) manufacturers have started to include a PVR function into the STB. However, such a TSTV technique has limitations. Further, it has been proposed to use IPTV with a network video recorder to reduce the cost for the user.

Some operators consider bringing the TSTV service by having full support by the network in a distributed fashion to maximize scalability of this service. This means that some network nodes (e.g. a Digital Subscriber Line Access Multiplexer, DSLAM) are equipped with a cache which keeps the Broad Cast TV (BCTV) streaming content for a while for a selection or all of the BC channels. Because of the limited memory space, the cache stores each eligible channel for only a limited time (e.g. half an hour). This means that the content of the cache is very dynamic and can e.g. be implemented through a logical buffer.

When the IPTV end-user watches time-shifted content, the STB gets its content from the cache in unicast, typically a unicast RTP (Real-Time Transport Protocol) stream. This is the on-demand paradigm. A standards based widely implemented control protocol for an on-demand streaming service is the Real Time Streaming Protocol (RTSP) which has defined methods/messages and parameter sets for passing PLAY, PAUSE, FFW and REV commands to the server or proxy, streaming its content over RTP, as well as session set-up/tear down methods.

RTP is a protocol providing end to end network transport functions suitable for applications transmitting real-time data over multicast or unicast network services. RTSP is an Application-level protocol for control over the delivery of data with real-time properties. The streams controlled by RTSP may use RTP, but the operation of RTSP does not depend on the transport mechanism used to carry continuous media. RTP and RTSP are designed to be independent of underlying transport and network layers.

Details regarding RTSP methods, parameters, requirements, etc. may be found in IETF (Internet Engineering Task Force) Request for Comments (RFC) 2326, "Real Time Streaming Protocol (RTSP)", by Schulzrinne et al. (dated April 1998), http://www.ietf.org/rfc/rfc2326.txt, which is incorporated by reference herein. Details about RTP may be found in IETF Request for Comments (RFC) 3550, "A Transport Protocol for Real-Time Applications (RTP)", by Schulzrinne et al. (dated July 2003), http://www.ietf.orq/rfc/rfc3550.txt, which is also incorporated by reference herein.

The dynamic content of the proxy cache for TSTV complicates an RTSP proxy implementation, in particular with respect to the identification by an IPTV client of the content he wishes to receive on demand. When the user wants e.g. to resume watching after having paused, the RTSP client will perform the "PLAY" method with a "range" indication.

The "range" indication indicates from which position onwards, the RTSP client wishes to receive the content. According to the RFC 2326, "Range" can be indicated in two ways:
- relative to the start of the clip (SMPTE (Society of Motion Picture and Television Engineers) time stamps or Normal Play Time NPT);
- in absolute time.

However, both methods are not ideal for TSTV. The usage of SMPTE or NPT time stamps as a range indication in RTSP, which time stamps refer to an absolute start time identifying a unique video content fragment, will make an implementation for dynamically changing content as in TSTV caches very complex. Note that even the cache size per channel can vary depending e.g. on the time of the day and popularity.

Absolute time would make the implementation easier. According to RFC 2326 absolute time in RTSP is expressed as <YYYYMMDD> <<T>> <HHMMSS.fraction>Z, e.g. for November 8, 1996 at 14h37 and 20 and a quarter seconds, this gives 19961108T143720.25Z. In the context of BCTV, the absolute time indication could refer to the time the live BC content was "aired" or the time at which the content is sent out over the MC tree by the HE (Head End). However, using absolute time according to RFC 2326 would require the RTSP proxy to keep per session continuously state of the contents the client is currently receiving or paused at. Moreover the RTSP proxy must know for each BC channel a one-to-one relationship between the RTP time stamp (which corresponds with the sampling instant of the corresponding picture for video streams) and the RTSP absolute time indication.

The object of the present invention is to provide a method for pausing a real-time data stream between two nodes, typically between a client and a proxy or server, and at a later point in time resuming said real-time data stream, wherein complex synchronization mechanisms at the proxy or the client are avoided.

To reach this object, the invention relates to a method for pausing a real-time data stream between a first node, typically a client and a second node, typically a proxy or server, and consequently resuming said data stream, wherein
- a real-time data stream is sent from the second node to the first node, using a transport protocol having packets with identifiers;
- said data stream is interrupted; the method being distinguished in that the first node requests the second node to resume the interrupted data stream, using a control protocol, wherein a transport protocol packet identifier of a packet of the data stream received by the first node before interrupting said data stream is used by the control protocol for indicating from which packet onwards the interrupted data stream has to be sent by the second node.

Using a transport protocol packet identifier of one of the last received packets by the first node, or a variable derived thereof, as a range indicator in a control protocol request can uniquely identify the content in the cache, regardless whether the control protocol request is serviced by for example a proxy or a server as second node. In other words the above mentioned problem encountered when using absolute RTSP time is avoided. Moreover, using a transport protocol packet identifier for indicating a range of packets to be sent by the second node allows the use of a lightweight version of the control protocol in the second node.

The invention further relates to a system for pausing a real-time data stream between the system and a node, and consequently resuming said data stream, comprising:
- a transport means for receiving a real-time data stream from the node, using a transport protocol having transport protocol packet identifiers,
- a control means for communicating with the network node using a control protocol. The system is distinguished in that said control means is arranged for using a transport protocol packet identifier of a packet of a received data stream for indicating from which packet onwards the real-time data stream has to be sent by the node.

According to preferred embodiment the system comprises a buffer for storing the last received packets of a real time data stream, wherein the control means are further arranged for extracting the transport protocol packet identifier of a packet stored in said buffer, and using said identifier in a control protocol request.

Finally the invention relates to a set-top box comprising a system according to the invention.

Preferably the transport protocol is a transport protocol for real-time applications, such as RTP, but any transport protocol having packets with identifiers is in principle suitable for the method and system according to the invention. The skilled person will understand that certain proprietary protocols could also be used to implement the invention.

The control protocol is preferably RTSP, especially when RTP is used as the transport protocol, but again other control protocols are possible, the only requirement being that one or more of the transport protocol identifiers (or a variable derived thereof) are suitable to be used in the control protocol requests as range indicators. If RTSP is used, it is convenient to use RTP time stamps as packet identifiers as they are in line with the current RTSP range indication parameter options which are also situated in the time domain. However, using RTP sequence numbers as identifiers or a combination of time stamps and sequence numbers would also be an option.

According to another option, an MPEG2 Transport stream could be used, carried over UDP or over RTP. If UDP is used, a control protocol, such as RTSP, using MPEG2 TS timestamps as range indicator, could be considered. In general, the choice of the transport and control protocol will depend on the protocol intelligence one wishes to have in the nodes.

Other advantageous embodiments of the invention are defined in the dependent claims.

The accompanying drawings are used to illustrate presently preferred nonlimiting, exemplary embodiments of the present invention. The above and other advantages, features and objects of the invention will become more apparent and the invention will be better understood from the following detailed description when read in conjunction with the accompanying drawings in which:
- Figure 1 is a simplified schematic drawing of an exemplary network environment in which the method of the present invention may be practiced.
- Figure 2 is a simplified schematic diagram of a typical message exchange between a client and a proxy or server wherein an embodiment of the method and system of the invention is used.
- Figure 3 is a flowchart illustrating an embodiment of the method according to the invention.

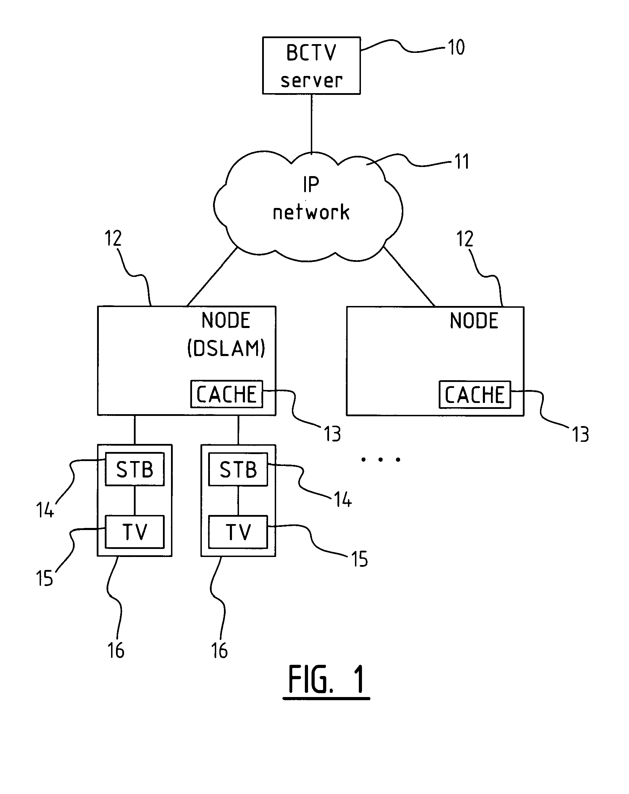

Figure 1 demonstrates an embodiment of a network environment wherein the method of the present invention may be employed. The basic means to serve many end-users 16 watching the same content is to stream via multicast (MC), utilizing the built-in features of the network 11 to serve the clients (end-users). A broadcast TV (BCTV) signal is typically converted first in RTP packets and then sent over the IP network 11 for transmission to a set-top box (STB) 14 connected to a TV 15 at a users premises 16. One of the key features of IPTV is the support for time shifted content and multiple speed trick mode (fast forward and rewind) which can be achieved only with unicast streams. The system must provide a seamless transition between the multicast and unicast modes of streaming, and the method of the invention can be used to provide such a transition in a simplified way compared to the methods of the prior art which have been set out above.

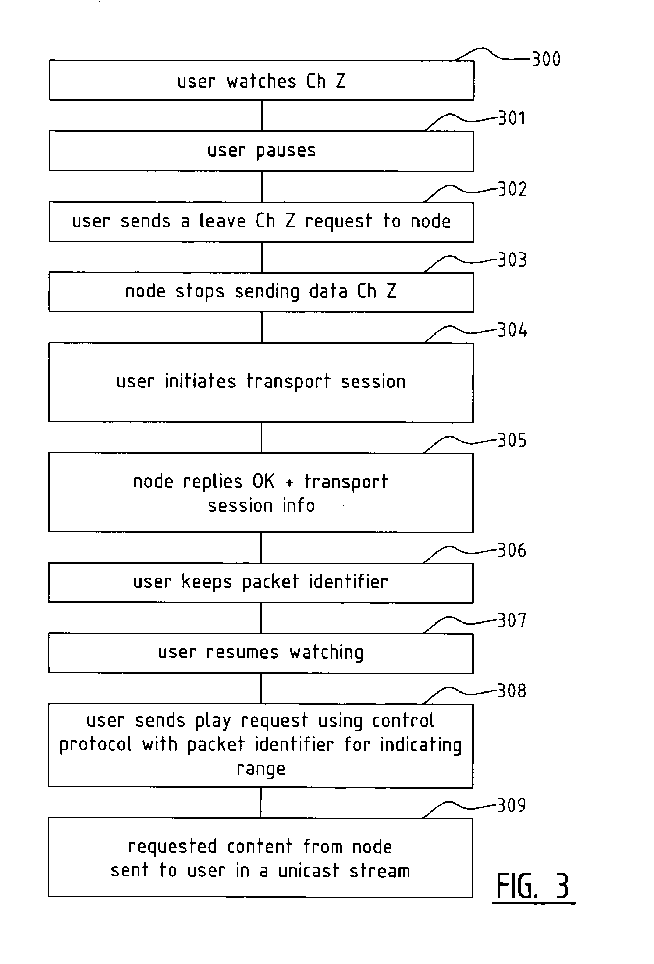

Now an embodiment of the method of the invention will be illustrated referring to figure 3. In the illustrated example a user is watching broadcast TV on Channel Z (ChZ), as indicated in step 300. During that period a multicast BCTV stream is sent from a node to the user using a transport protocol. When a viewer decides to pause (step 301), the user sends a leave ChZ request to the node, typically using a management protocol such as IGMP (Internet Group Management Protocol), whereupon the node stops transmitting the ChZ data to the user (step 302).

For allowing to resume watching after a certain period of time, the user will typically initiate a transport session (step 305), wherein a number of transport session parameters are exchanged between the user and the node using a control protocol (step 306), such as RTSP. During these steps the user will typically indicate which channel needs to be received later on, so that the node can locally cache this channel or forward the request to a server. Also the user can for example indicate on which port he wishes to receive the unicast data stream when he resumes watching.

Further, the user will retrieve a transport protocol packet identifier of one of the packets received before interrupting the data stream, as indicated in step 306. When the user then decides to resume watching (step 307), he will send a play request using the control protocol, wherein the retrieved transport protocol packet identifier is used to indicate from which packet the unicast data stream has to start. According to a possibility, the last received packets of the multicast data stream are kept in a buffer of the user, and the time stamp of one of these packets is used as a range indicator in the control protocol play request. Another option would be to only retrieve the sequence number # of the last received packet, and to use the sequence number plus one (#+1) as a range indicator in the play request.

Upon receipt of this control protocol request, the node will start sending a unicast data stream starting with the packet having a packet identifier corresponding to the range indicator included in the play request.

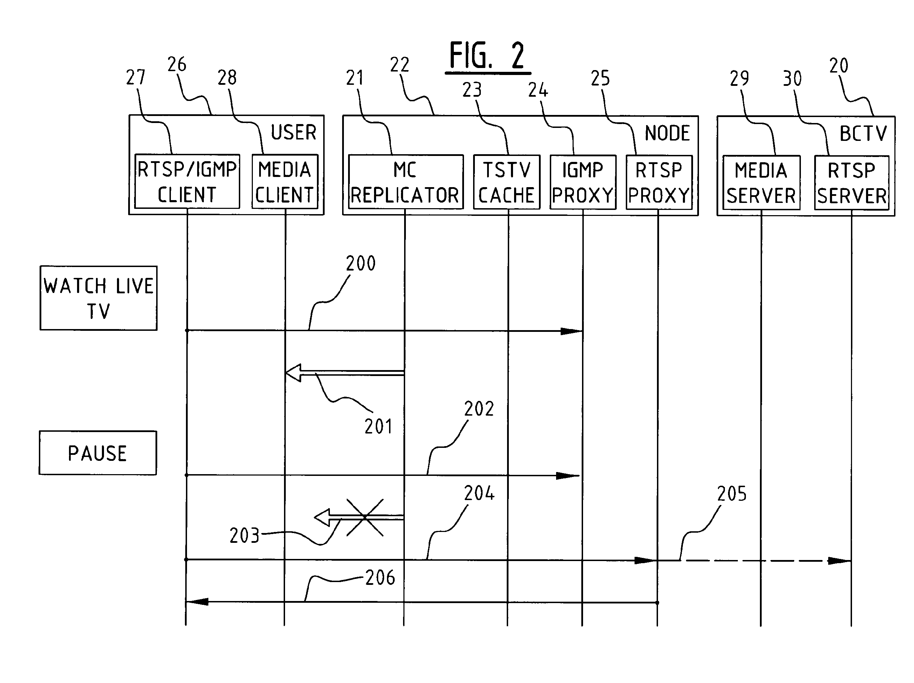

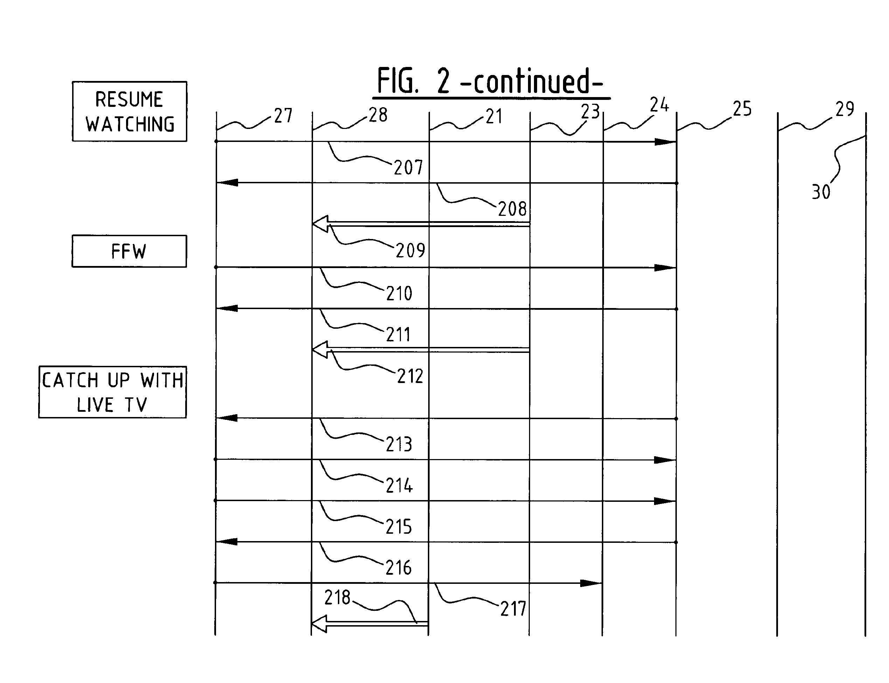

Figure 2 depicts an example of a typical message exchange between a proxy and a client according to an embodiment of the method and system of the invention where RTP is used as the transport protocol and RTSP as the control protocol. Figure 2 shows the messages which are exchanged between the user 26 (RTSP/IGMP client 27 + media client 28), the network node 22 (MC replicator 21, TSTV cache 23, IGMP proxy 24, RTSP proxy 25) and the BCTV server 20 (media server 29, RTSP server 30).

When a user wants to watch live TV on Channel Z (ChZ), the IGMP (Internet Group Management Protocol) client will send a "join" ChZ message 200 to an IGMP proxy, whereupon the MC replicator will start to send multicast RTP packets 201 to the media client, which RTP packets are converted to suitable TV signals so that the user can watch live TV.

When the user decides to pause, the IGMP client sends a "leave" ChZ message 202 to the IGMP proxy, whereupon the sending of multicast RTP packets is interrupted 203. The client will then freeze the display and typically keep the buffer content of the STB. Note that it is also possible to remove the buffer content and to keep only the time stamp or sequence number of one of the last received packets, or a variable derived from the said time stamp or sequence number. If the last received packet has sequence number 500, sequence number 501 could be used as a range indicator, for example.

Also the client 27 sends for example the following message 204 to the RTSP proxy of the node 22 for initiating the transport session, wherein the client indicates which data (e.g. video/audio) he wishes to receive in unicast mode:
SETUP rtsp://TSTV.video.operator.com/ChZ/; indicate Media Client Listner ports

This SETUP message specifies the requested file URL. The RTSP proxy will then typically reply with a message 206 providing the requested transport session parameters:
OK + Media Server streaming ports + Session Identifier

If Channel Z is not locally cached in the node 22, this RTSP message is forwarded to the RTSP server 30 (arrow 205), which server will then reply in a similar manner.

When the user resumes watching, the RTSP client sends the following PLAY message 207 to the RTSP proxy using the stored RTP time stamp of one of the last received RTP packets as a range indicator:
PLAY rtsp://TSTV.video.operator.com/ChZ/; range= Timestamp T

The RTSP proxy will reply with an OK message 208, whereupon a unicast RTP stream 209 is sent from the TSTV cache 23. Note that the Timestamp T may not uniquely identify a packet, as several packets from the same RTP session or flow may carry the same timestamp; according to RFC3550 several consecutive packets have equal timestamps if they are logically generated at once, e.g. if they belong to the same video frame. However, as RTP packets of e.g. a BC TV channel are typically stored in the order that they are received, this is not a problem. The logic in the cache will start transmitting a unicast stream from the first RTP packet with the corresponding timestamp T, and the requesting user can delete any packets already present in his buffer. In other words, if N packets of the BC TV channel carry the same timestamp, what may happen is that the user receives M packets (M<=N) already present in his buffer. This is not an issue as the circuitry inside the user will typically be designed to make sure that any duplicate packets are dropped.

According to a further option the user may decide to fast forward the channel he is watching, whereupon the following PLAY message 210 is sent to the RTSP proxy:
PLAY rtsp://TSTV.video.operator.com/ChZ/; scale= 3

The RTSP proxy responds with an OK message 211, and a fast forwarded unicast RTP stream 212 is sent from the TSTV cache 23 to the media client 28. If the user catches up with live TV, then this RTP stream is interrupted 219, and the RTSP proxy sends for example the following REDIRECT message 213 to the client:
REDIRECT rtsp://TSTV.video.operator.com/ChZ/; Location =rtsp://MC alcatel/ChZ:8001

The RTSP proxy replies with an OK message 214, whereupon the client typically sends the following TEARDOWN message 215 to close the unicast session:
TEARDOWN rtsp://video.alcatel.com/movie

The RTSP proxy sends again an OK message 216, whereupon the IGMP client sends a "join" ChZ message 217 to the IGMP proxy. Now the MC replicator is again sending multicast RTP packets 218 to the media client, and the user is again watching live TV.

The skilled person will understand that the RTSP message exchange flow above is only one possible implementation example and that many variations and modifications are possible. Further, the skilled person will have no problems in adapting the message exchange flow above if other transport and/or control protocols are used in the method or system of the invention.

While the principles of the invention have been set out above in connection with specific embodiments, it is to be clearly understood that this description is merely made by way of example and not as a limitation of the scope of protection which is determined by the appended claims.

## Claims

1. Method for pausing a real-time data stream from a second node to a first node, and consequently resuming said data stream, wherein
- a real-time data stream is sent from the second node to the first node, using a transport protocol having packets with identifiers;
- said data stream is interrupted; **characterized in that**
- the first node requests the second node to resume the interrupted data stream, using a control protocol, wherein a transport protocol packet identifier of a packet of the data stream received by the first node before interrupting said data stream is used by the control protocol for indicating from which packet onwards the interrupted data stream has to be sent by the second node.

2. Method according to claim 1, **characterized in that** RTP is used as the transport protocol.

3. Method according to claim 1, **characterized in that** the transport protocol packet identifier is a time stamp or a packet sequence number or a combination thereof.

4. Method according to claim 1, **characterized in that** RTSP is used as the control protocol.

5. Method according to claim 1, **characterized in that** the first node is a client node and that the second node is a proxy or server.

6. Method according to claim 1, **characterized in that** the first node stores the last received packets of the real-time data stream in a buffer, and that the packet identifier is retrieved from one of the packets in the buffer upon interruption of the data stream.

7. Method according to claim 1, wherein the real-time data stream is cached in the second node, **characterized in that** upon interruption, the first node sends a control protocol request using the packet identifier as a range indicator, and that the second node sends a unicast data stream starting with the first packet of the cached data stream with an identifier corresponding to the range indicator.

8. System for pausing a real-time data stream from a node arranged to the system, and consequently resuming said data stream, comprising:
- a transport means for receiving a real-time data stream from the node, using a transport protocol having transport protocol packet identifiers,
- a control means for communicating with the network node using a control protocol, **characterized in that** said control means is arranged for using a transport protocol packet identifier of a packet of a received data stream to indicate from which packet onwards the real-time data stream has to be sent by the node.

9. System according to claim 8, comprising a buffer for storing the last received packets of a real time data stream, **characterized in that** the control means are arranged for extracting the transport protocol packet identifier of a packet stored in said buffer, and using said identifier in a control protocol request.

10. Set-top box comprising a system according to claim 8.
